# EUROPEAN PATENT APPLICATION

(11) **EP 2 611 231 A1**
(43) Date of publication of application: **03.07.2013**
(21) Application number: 11819291.3
(22) Date of filing: 25.02.2011
(51) Int. Cl.: H04W 24/00

(54) **SIGNALING TRACE METHOD AND DEVICE**

(30) Priority: 27.08.2010 CN 201010266599
(71) Applicant: ZTE Corporation, Shenzhen, Guangdong 518057 (CN)
(72) Inventor: HUANG, Shuqiang, Shenzhen Guangdong 518057 (CN); WU, Daoli, Shenzhen Guangdong 518057 (CN)
(74) Representative: Dr. Weitzel & Partner
(86) International application number: PCT/CN2011/071297
(87) International publication number: WO 2012/024916

(57) **Abstract**

A method for signaling trace is provided in the present invention. The method comprises: when it is verified that the user access capability of UE is complied with the user access capability contained in the stored trace control and configuration parameters for activating the trace session and a start triggering event is triggered, starting the trace recording session of the UE. An apparatus for signaling trace is provided in the present invention. The present invention realizes signaling trace on the UE with specific access capability, and when the UE is required to report more and more performance measurement reports, the effect on the UE by the performance measurement reports can be reduced effectively.

## Description

### Field of the Invention

The present invention relates to signaling trace technology in mobile communications, and in particular to a method and an apparatus for signaling trace.

### Background of the Invention

In mobile communication networks, there are two methods for performing signaling trace on a User Equipment (UE), i.e. management-based activation and signaling-based activation. In this case, the management-based activation in particular is as follows: the Element Management System (EMS) sends trace parameters to each network element (NE), and when a trace event of any network element is triggered, the trace recording session of a corresponding UE will be activated; and the signaling-based activation in particular is as follows: the EMS sends trace parameters to a certain network element and this network element transfers the trace parameters to another network element by means of signaling, and when a trace event of any network element is triggered, the trace recording session of a corresponding UE will be activated.

The implementation of the current UE trace mechanism is basically as follows: the EMS carries a user number (IMSI/IMEI) in a transmitted trace session activation message, after receiving the signaling carrying the user number, the network element receiving the trace session activation message verifies whether or not this signaling meets a signaling triggering event, and if it meets, then the trace recording session will be started, otherwise, the trace recording session will not be started. Such trace mechanism cannot judge whether or not to start trace according to the support capability or the state of the UE. While with the application of ad hoc network and the minimization of drive test technology, the UE is required to report more and more performance measurement reports, and in order to reduce the effect on the UE by the performance measurement reports, it is required to activate signaling trace for the UE which meets a certain wireless access capability.

### Summary of the Invention

In view of this, the present invention provides a method and an apparatus for signaling trace to solve the problem in the current signaling trace that the signaling trace cannot be activated according to the wireless access capability of the UE.

In order to achieve the above objective, the technical solution in the present invention is implemented as follows:
a method for signaling trace is provided in the present invention, wherein the method comprises: when it is verified that user access capability of a User Equipment (UE) is complied with user access capability contained in stored trace control and configuration parameters for activating a trace session and a start triggering event is triggered, starting a trace recording session of the UE.

In the above solution, the trace control and configuration parameters further contain a triggering event and a trace reference identifier.

In the above solution, before verifying that the user access capability of the UE is complied with the user access capability contained in the trace control and configuration parameters, the method further comprises: an Element Management System (EMS) sending the trace control and configuration parameters containing user access capability and activating the trace session of the UE; and an element receiving the trace control and configuration parameters storing the trace control and configuration parameters.

In the above solution, the trace control and configuration parameters are transferred to each element to be traced successively, and the trace recording session of the UE is started at each element to be traced.

In the above solution, the EMS sends the trace control and configuration parameters containing user access capability and activates the trace session of the UE; a Home Subscriber Server (HSS) receives the trace control and configuration parameters sent by the EMS and stores the trace control and configuration parameters, and when receiving the user access capability of the UE, the HSS verifies whether the received user access capability of the UE is complied with the user access capability in the trace control and configuration parameters, and if so, then the HSS transfers the trace control and configuration parameters to a Mobility Management Entity (MME), and if not, then the HSS does not transfer the trace control and configuration parameters to the MME; when receiving a signaling sent by the UE and complied with the start triggering event, the MME starts the trace recording session of the UE and transfers the trace control and configuration parameters to next element; the next element receives the trace control and configuration parameters, stores the same, starts the trace recording session of the UE, and transfers the trace control and configuration parameters to the next element thereof; and so on, until an Evolved NodeB (eNodeB) receives the trace control and configuration parameters, and stores the trace control and configuration parameters and starts the trace recording session of the UE.

In the above solution, the method further comprises: the EMS sending the trace control and configuration parameters containing user access capability and activating the trace session of the UE; and
the eNodeB receiving the trace control and configuration parameters and storing the trace control and configuration parameters, and when receiving the user access capability of the UE, the eNodeB verifying whether the received user access capability of the UE is complied with the user access capability in the trace control and configuration parameters, and if so, then the eNodeB starting the trace recording session of the UE when the start triggering event of the UE is triggered, and if not, then the eNodeB not starting the trace recording session of the UE.

In the above solution, the eNodeB starting the trace recording session of the UE is as follows: after receiving a Non-Access-Stratum service request sent by the UE, the eNodeB verifying user access capability of the UE contained in the Non-Access-Stratum service request is complied with the user access capability in the trace control and configuration parameters, and the Non-Access-Stratum service request is complied with the start triggering event of the UE, then the eNodeB starting the trace recording session of the UE.
an apparatus for signaling trace is also provided in the present invention, wherein the apparatus comprises: a verification unit and a starting unit, wherein the starting unit is configured to start a trace recording session when a start triggering event is triggered; and
the verification unit is configured to, when it is verified that user access capability of a User Equipment (UE) is complied with user access capability contained in stored trace control and configuration parameters for activating a trace session, start the starting unit to perform the trace recording session of the UE.

In the above solution, the apparatus further comprises: a storage unit, wherein the storage unit is configured to receive and store the trace control and configuration parameters containing user access capability; and the verification unit is further configured to verify whether the user access capability of the UE is complied with the user access capability contained in the trace control and configuration parameters stored by the storage unit for activating the trace session, and if so, then configured to start the starting unit to perform the trace recording session of the UE; and if not, then configured not to start the starting unit.

In the above solution, the apparatus further comprises: a transferring unit, wherein the transferring unit is configured to transfer the trace control and configuration parameters stored by the storage unit to next element to be traced of current element.

In the method and the apparatus for signaling trace in the present invention, the trace recording session of the UE will be started only when it is verified that the user access capability of the UE is complied with the user access capability contained in the stored trace control and configuration parameters, which realizes signaling trace on the UE with specific access capability, and when the UE is required to report more and more performance measurement reports, the effect on the UE by the performance measurement reports can be reduced effectively.

### Brief Description of the Drawings

FIG. 1 is a schematic flowchart of the implementation of a method for signaling trace according to the present invention;
FIG. 2 is an interaction schematic diagram of performing signaling trace on the UE with specific access capability by means of signaling by taking the EPC for example according to Embodiment I of the present invention; and
FIG. 3 is an interaction schematic diagram of performing signaling trace on the
   UE with specific access capability by means of management by taking the E-UTRAN for example according to Embodiment II of the present invention.

### Detailed Description of Embodiments

In the present invention, signaling trace is performed on the UE based on the user number and user access capability (UE Capability), and the present invention supports the application scenario where signaling trace is performed on the UE with specific wireless access capability.

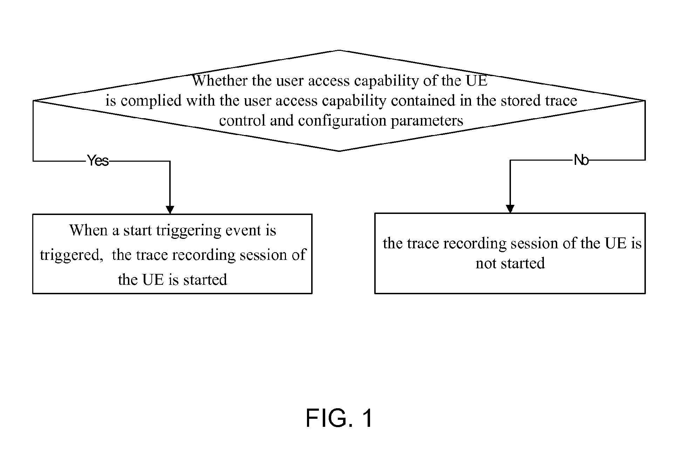

The signaling trace method in the present invention can realize signaling trace on the UE with specific access capability, and referring to FIG. 1, the method mainly comprises: verifying whether user access capability of a UE is complied with user access capability contained in stored trace control and configuration parameters for activating the trace session, and if so, then when a start triggering event is triggered, trace recording session of the UE is started, otherwise, the trace recording session of the UE is not started.

Herein, the above process can be executed by any network element storing the trace control and configuration parameters in the mobile communication network, or executed by a plurality of network elements storing the trace control and configuration parameters in the mobile communication network, for example, the above process can be executed by a Home Subscriber Server (HSS) and an Mobility Management Entity (MME) together, or can be executed by an evolved Node B (eNodeB) and so on.

Herein, the trace control and configuration parameters at least contain UE Capability, a triggering event, and a trace reference identifier.

In this case, the UE Capability can be valued as Universal Telecommunication Radio Access (UTRA) Frequency Division Duplexing (FDD), Time Division Duplexing (TDD), GSM/EDGE Radio Access Network (GERAN), etc., and can also be valued as any other parameter values that can be used for representing the wireless access capability of the user terminal.

In this case, before verifying whether the user access capability of the UE is complied with the user access capability contained in trace control and configuration parameters, the method can further comprise: the EMS sends the trace control and configuration parameters containing user access capability and activates the trace session of the UE, and the element receiving the trace control and configuration parameters stores the same.

Herein, the EMS sends out the trace control and configuration parameters by carrying the same in a trace session activation message to be transmitted.

In this case, the method further comprises: the trace control and configuration parameters are transferred to each element to be traced successively, and the trace recording session of the UE is started at each element to be traced. Herein, the trace control and configuration parameters can be transferred to each element to be traced successively by using the signaling interacted between various network elements to be traced. It needs to be noted that the method contains this step only when realizing signaling trace by means of signaling.

In particular, the EMS sends the trace control and configuration parameters containing user access capability and activates the trace session of the UE; the HSS receives the trace control and configuration parameters sent by the EMS and stores the same, and when receiving the user access capability of the UE, the HSS verifies whether the received user access capability of the UE is complied with the user access capability in the trace control and configuration parameters, and if so, then the HSS transfers the trace control and configuration parameters to the MME, otherwise, the HSS does not transfer the trace control and configuration parameters to the MME; when receiving a signaling sent by the UE and complied with the start triggering event, the MME starts the trace recording session of the UE and transfers the trace control and configuration parameters to the next element; the next element receives the trace control and configuration parameters, stores the same, starts the trace recording session of the UE, and transfers the trace control and configuration parameters to the next element thereof; and so on, until the eNodeB receives the trace control and configuration parameters and stores the same and starts the trace recording session of the UE.

Alternatively, the method can further comprise: the EMS sends the trace control and configuration parameters containing user access capability and activates the trace session of the UE; the eNodeB receives the trace control and configuration parameters and stores the same, and when receiving the user access capability of the UE, the eNodeB verifies whether the received user access capability of the UE is complied with the user access capability in the trace control and configuration parameters, and if so, then the trace recording session of the UE is started when the start triggering event of the UE is triggered, otherwise, the trace recording session of the UE is not started. It needs to be noted that the method contains this process only when realizing signaling trace by means of management.

In this case, the eNodeB starting the trace recording session of the UE can be in particular as follows: after receiving a Non-Access-Stratum service request sent by the UE, the eNodeB verifies whether or not the user access capability of the UE contained in the Non-Access-Stratum service request is complied with the user access capability in the trace control and configuration parameters, and if the Non-Access-Stratum service request is complied with the start triggering event of the UE, then the trace recording session of the UE is started.

In order to implement the above signaling trace method, an apparatus for signaling trace is further provided in the present invention, which mainly comprises: a verification unit and a starting unit, wherein the starting unit is configured to start the trace recording session when a start triggering event is triggered; and the verification unit is configured to verify whether the user access capability of the UE is complied with the user access capability contained in the stored trace control and configuration parameters for activating the trace session, and if so, then the starting unit is started to perform the trace recording session of the UE.

In real applications, the above apparatus can be set on any network element in the mobile communication network and can also be set on a plurality of network elements simultaneously, and the verification unit and the starting unit therein can also be set on various network elements respectively, for example, the verification unit can be set on the HSS of the EPC, and at the same time the starting unit can be set on the MME of the EPC, or the above apparatus can be set on the eNodeB of the Evolved UMTS Terrestrial Radio Access Network (E-UTRAN).

In this case, the apparatus further comprises: a storage unit, configured to receive and store the trace control and configuration parameters containing user access capability; and the verification unit is further configured to verify whether the user access capability of the UE is complied with the user access capability contained in the trace control and configuration parameters stored by the storage unit for activating the trace session, and if so, then the starting unit is started to perform the trace recording session of the UE; and if not, then the starting unit is not started.

In this case, the apparatus can further comprise: a transferring unit, configured to transfer the trace control and configuration parameters stored by the storage unit to the next element of the current element.

In particular, the signaling trace of the UE is realized by this signaling trace apparatus, and the particular implementation can be referred to the flow of the following embodiments.

Hereinafter, the implementation of the technical solution of the present invention will be further described in detail in conjunction with the drawings and particular embodiments.

### Embodiment I

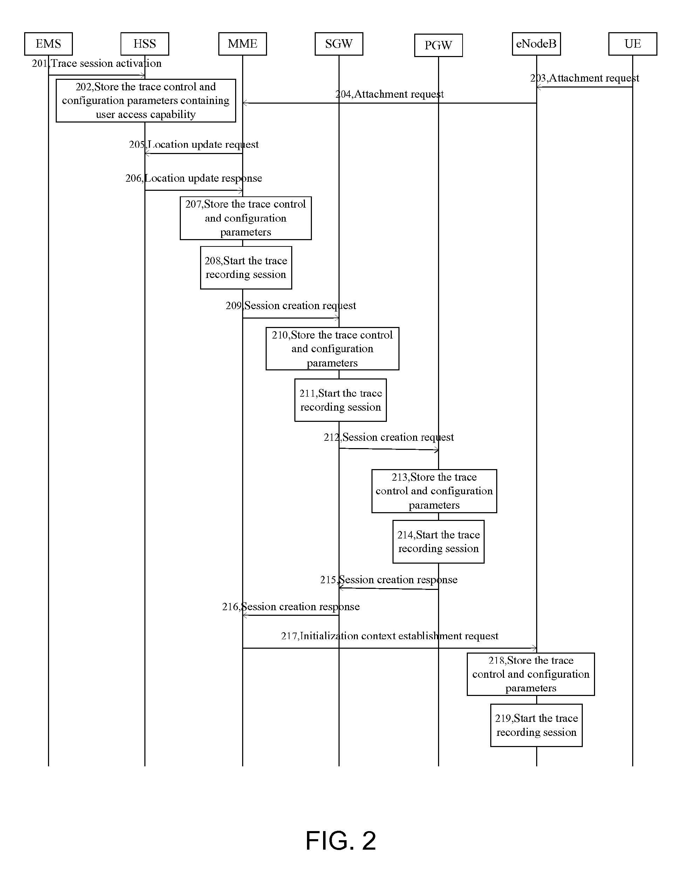

As shown in FIG. 2, taking an EPC system as an example, the process of carrying out signaling trace on the user equipment with specific access capability by means of signaling in particular comprises the flow as follows.

Step 201, the EMS sends a trace session activation message to the HSS, wherein the message carries trace control and configuration parameters containing UE Capability the value of which is supporting UTRA FDD.

Herein, the trace control and configuration parameters at least contain a user number, UE Capability, a triggering event and a trace reference identifier.

The user number in particular can comprise the International Mobile Subscriber Identity (IMSI) and/or International Mobile Equipment Identity (IMEI) of the user equipment.

Step 202, the HSS receives the trace session activation message sent by the EMS and stores the trace control and configuration parameters therein.

Steps 203 to 204, the UE sends an attachment request to the eNodeB, and the eNodeB forwards the attachment request of the UE to the MME.

Herein, the attachment request sent by the UE comprises information such as its own UE Capability, user number, etc.

Step 205, after receiving the attachment request sent by the eNodeB, the MME sends a location update request of the UE to the HSS.

Herein, the location update request of the UE contains information such as the UE Capability, user number, etc. of the UE.

Step 206, after receiving the location update request from the MME, the HSS returns a location update response to the MME.

In particular, the HSS judges whether or not the user number of the UE is the specific traced user number, i.e. the HSS judges whether the user number of the UE is contained in the trace control and configuration parameters stored by itself, and the HSS judges whether or not the UE Capability of the UE is consistent with the UE Capability in the trace control and configuration parameters stored by itself, i.e. the UE Capability of the UE is supporting UTRA FDD. Then, the HSS carries the trace control and configuration parameters stored by itself in the location update response sent to the MME and starts the trace recording session of the UE on the MME;

Herein, the trace control and configuration parameters sent by the HSS to the MME in particular can comprise: a user number (IMSI or IMEISV), a trace session reference number (Trace Reference), a trace event (Triggering events for MME, Serving GW, PDN GW), a trace depth (Trace Depth for MME, Serving GW, PDN GW, eNB), a trace element type (List ofNE types to trace), a trace interface (List of Interfaces for MME, Serving GW, PDN GW, eNB), and a trace connection entity address (IP address of Trace Collection Entity).

Step 207, the MME receives the location update response carrying the trace control and configuration parameters and stores the trace control and configuration parameters therein.

Step 208, the MME starts the trace recording session of the UE when receiving a signaling sent by the UE and complied with the start triggering event in the trace control and configuration parameters in the trace session.

Steps 209 to 210, the MME sends a session creation request to the S-GW, wherein the session creation request carries the trace control and configuration parameters, and the S-GW receives the session creation request and stores the trace control and configuration parameters therein.

Herein, the trace control and configuration parameters sent by the MME to the S-GW comprise: a user number, a trace session reference number, a trace recording session reference number (Trace recording session Reference), a trace event (Triggering events for PDN GW), a trace depth (Trace Depth for Serving GW, PDN GW), a trace element type (List of NE types to trace), a trace interface (List of Interfaces for Serving GW, PDN GW), and a trace collection entity address.

Step 211, the S-GW starts the trace recording session of the UE.

Steps 212 to 213, the S-GW sends a session creation request to the P-GW, wherein the request carries trace control and configuration parameters, and the P-GW receives the session creation request and stores the trace control and configuration parameters therein.

Herein, the trace control and configuration parameters sent by the S-GW to the P-GW comprise: a user number, a trace session reference number, a trace recording session reference number, a trace event (Triggering events for Serving GW, PDN GW), a trace depth (Trace Depth for Serving GW, PDN GW), a trace interface (List of Interfaces for PDN GW), and a trace collection entity address.

Step 214, the P-GW starts the trace recording session of the UE.

Steps 215 to 216, the P-GW returns a session creation response to the S-GW, and then the S-GW returns the session creation response to the MME.

Steps 217 to 218, the MME sends an initialization context establishment request to the eNodeB, wherein the request carries the trace control and configuration parameters; and the eNodeB receives the initialization context establishment request and stores the trace control and configuration parameters therein.

Herein, the trace control and configuration parameters sent by the MME to the eNodeB in particular can comprise: a trace session reference number, a trace recording session reference number, a trace depth (Trace Depth for eNB), and a trace collection entity address.

Step 219, the eNodeB starts the trace recording session of the UE, and by then, the signaling trace of the UE is realized.

### Embodiment II

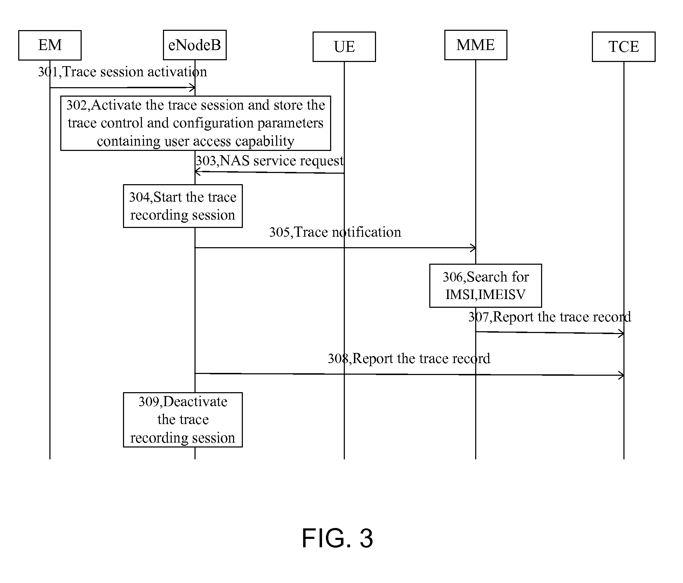

As shown in FIG. 3, taking the E-UTRAN as an example, the process of carrying out signaling trace on the user equipment with specific access capability by means of management in particular comprises the flow as follows.

Step 301, the EMS sends a trace session activation message to the eNodeB via an element manager (EM), wherein the message carries trace control and configuration parameters containing UE Capability.

In this case, the trace control and configuration parameters at least contain UE Capability, a triggering event and a trace reference identifier.

Herein, the UE Capability contained in the trace control and configuration parameters is supporting UTRA FDD.

Step 302, the eNodeB receives the trace session message, activates its own trace session, and stores the trace control and configuration parameters carried in the trace session message.

Step 303, the UE sends a Non-Access-Stratum (NAS) service request to the eNodeB and accesses the eNodeB.

Herein, the NAS service request sent by the UE contains information such as UE Capability of the UE.

Steps 304 to 307, the eNodeB receives the NAS service request sent by the UE, determines that the UE Capability contained in the NAS service request is complied with the UE Capability in the trace control and configuration parameters stored by the eNodeB and the NAS service request sent by the UE is complied with the start triggering event in the trace control and configuration parameters stored by the eNodeB, and then the eNodeB starts the trace recording session of the UE and sends a trace notification message to the MME; and after receiving the trace notification message, the MME searches for the user number (IMSI and IMEISV) of the UE on itself, and reports the trace record to a Trace Collection Entity (TCE), wherein the trace record reported by the MME contains the traced session reference number, the trace recording session reference number, and the searched IMSI and IMEISV.

Step 308, the eNodeB reports the trace record corresponding to the trace recording session to the TCE, and the trace record reported by the eNodeB contains the traced session reference number and trace recording session reference number of the trace recording session.

Step 309, when the stop triggering event of the trace recording session is triggered, for example, when receiving a signaling of triggering the stop triggering event of the trace recording session, the eNodeB deactivates the trace recording session of the UE.

Above description is only to illustrate reference embodiments of the present invention regarding EPC/E-UTRAN, and not to limit the scope of protection of the present invention.

Above description is only to illustrate the preferred embodiments but not to limit the present invention, and any amendments, equivalent substitutions, improvements etc. within the sprit and principle of the present invention are all concluded in the scope of protection of the present invention.

## Claims

1. A method for signaling trace, **characterized by** comprising:
when it is verified that user access capability of a User Equipment (UE) is complied with user access capability contained in stored trace control and configuration parameters for activating a trace session and a start triggering event is triggered, starting a trace recording session of the UE.

2. The method for signaling trace according to Claim 1, **characterized in that** the trace control and configuration parameters further contain a triggering event and a trace reference identifier.

3. The method for signaling trace according to Claim 1 or 2, **characterized in that** before verifying that the user access capability of the UE is complied with the user access capability contained in the trace control and configuration parameters, the method further comprises:
an Element Management System (EMS) sending the trace control and configuration parameters containing user access capability and activating the trace session of the UE; and an element receiving the trace control and configuration parameters storing the trace control and configuration parameters.

4. The method signaling trace according to Claim 3, **characterized in that** the method further comprises:
transferring the trace control and configuration parameters to each element to be traced successively, and starting the trace recording session of the UE at each element to be traced.

5. The method for signaling trace according to Claim 4, **characterized in that** the method further comprises:
the EMS sending the trace control and configuration parameters containing user access capability and activating the trace session of the UE;
a Home Subscriber Server (HSS) receiving the trace control and configuration parameters sent by the EMS and storing the trace control and configuration parameters, and when receiving the user access capability of the UE, the HSS verifying whether the received user access capability of the UE is complied with the user access capability in the trace control and configuration parameters, and if so, then the HSS transferring the trace control and configuration parameters to a Mobility Management Entity (MME), and if not, then the HSS not transferring the trace control and configuration parameters to the MME;
when receiving a signaling sent by the UE and complied with the start triggering event, the MME starting the trace recording session of the UE and transferring the trace control and configuration parameters to next element;
the next element receiving the trace control and configuration parameters, storing the trace control and configuration parameters, starting the trace recording session of the UE, and transferring the trace control and configuration parameters to the next element thereof;
and so on, until an Evolved NodeB (eNodeB) receives the trace control and configuration parameters, and stores the trace control and configuration parameters, starting the trace recording session of the UE.

6. The method for signaling trace according to Claim 3, **characterized in that** the method further comprises:
the EMS sending the trace control and configuration parameters containing user access capability and activating the trace session of the UE; and
the eNodeB receiving the trace control and configuration parameters and storing the trace control and configuration parameters, and when receiving the user access capability of the UE, the eNodeB verifying whether the received user access capability of the UE is complied with the user access capability in the trace control and configuration parameters, and if so, then the eNodeB starting the trace recording session of the UE when the start triggering event of the UE is triggered, and if not, then the eNodeB not starting the trace recording session of the UE.

7. The method for signaling trace according to Claim 3, **characterized in that** the eNodeB starting the trace recording session of the UE is as follows:
after receiving a Non-Access-Stratum service request sent by the UE, the eNodeB verifying user access capability of the UE contained in the Non-Access-Stratum service request is complied with the user access capability in the trace control and configuration parameters, and the Non-Access-Stratum service request is complied with the start triggering event of the UE, then the eNodeB starting the trace recording session of the UE.

8. An apparatus for signaling trace, **characterized by** comprising: a verification unit and a starting unit, wherein
the starting unit is configured to start a trace recording session when a start triggering event is triggered; and
the verification unit is configured to, when it is verified that user access capability of a User Equipment (UE) is complied with user access capability contained in stored trace control and configuration parameters for activating a trace session, start the starting unit to perform the trace recording session of the UE.

9. The apparatus for signaling trace according to Claim 8, **characterized in that** the apparatus further comprises a storage unit, wherein
the storage unit is configured to receive and store the trace control and configuration parameters containing user access capability; and
the verification unit is further configured to verify whether the user access capability of the UE is complied with the user access capability contained in the trace control and configuration parameters stored by the storage unit for activating the trace session, and if so, then configured to start the starting unit to perform the trace recording session of the UE; and if not, then configured not to start the starting unit.

10. The apparatus for signaling trace according to Claim 8 or 9, **characterized in that** the apparatus further comprises a transferring unit, wherein
the transferring unit is configured to transfer the trace control and configuration parameters stored by the storage unit to next element to be traced of current element.
